# FASCICULE DE BREVET EUROPEEN

(11) **EP 0 504 079 B1**
(45) Date de publication et mention de la délivrance du brevet: **27.09.1995**
(21) Numéro de dépôt: 92430004.9
(22) Date de dépôt: 14.02.1992
(51) Int. Cl.: H02M 7/515

(54) **Générateur statique de puissance et procédés d'alimentation utilisant ce générateur**
Statischer Leistungsgenerator und Stromversorgungsverfahren, das diesen Generator benützt
Static power generator and power supply method using this generator

(30) Priorité: 13.03.1991 FR 9103355
(43) Date de publication de la demande: 16.09.1992
(73) Titulaire: ETABLISSEMENTS DEGREANE S.A., F-83000 Toulon (FR)
(72) Inventeur: Ducros, Bernard, F-83100 Toulon (FR); Pohlenz, Charles, F-83140 Six Fours (FR); Quinones, Jean-Marie, F-83210 Sollies Pont (FR)
(74) Mandataire: Somnier, Jean-Louis

(56) Documents cités:
- EP-A- 0 032 335
- FR-A- 2 349 231
- US-A- 4 293 904

## Description

La présente invention est relative à un générateur statique de puissance et à des procédés d'alimentation utilisant ce générateur.

Le domaine technique de l'invention est celui des dispositifs d'alimentation électrique de puissance.

On connaît de nombreux types de générateurs statiques de puissance.

Dans le cas fréquent d'alimentation de puissance à très basse fréquence, par exemple à une fréquence voisine de 50 Hz, on utilise très souvent des onduleurs à Modulations de Largeur d'Impulsion (M.L.I.); dans ce type d'onduleurs, on utilise en général une seule source d'alimentation avec un seul commutateur qui est commandé en modulation de largeur d'impulsion; ce commutateur découpe la tension continue d'alimentation en séquences qualifiées d'anharmoniques, lesquelles séquences sont calculées de telle façon que la fréquence fondamentale d'alimentation soient optimisée pour un nombre de découpages donnés; de ce fait, ce type d'onduleur présente un taux de distorsion d'autant plus faible que la fréquence de commutation est élevée; dans ce type d'onduleur, la capacité de commutation du commutateur qui découpe la tension continue d'alimentation pour toute la puissance demandée, constitue une limite physique qui entraîne pour une fréquence fondamentale, par exemple sinusoïde d'un signal sinusoïdal de sortie, un nombre maximal de commutations; l'addition de cette séquence d'impulsions se fait sur la charge par l'intermédiaire d'un filtre résonnant à la fréquence fondamentale souhaitée en sortie, lequel filtre doit avoir un coefficient de surtension relativement faible pour pouvoir fonctionner dans une bande de fréquence entourant la fréquence fondamentale souhaitée; ce type de générateur est inadapté à l'alimentation de charge nécessitant une fréquence variable dans de grandes plages, et dont l'impédance peut varier; par ailleurs, ces onduleurs provoquent des distorsions à la sortie et génèrent d'importants rayonnements électromagnétiques du fait de leur principe de fonctionnement.

De plus, ces onduleurs sont très volumineux du fait de la présence des filtres de puissance disposés en sortie.

On connaît par ailleurs des générateurs ou amplificateurs de signaux de formes quelconques et de fréquences pouvant varier dans de larges plages; ces générateurs ou amplificateurs sont généralement constitués d'amplificateurs à semi conducteurs de classe A ou B qui génèrent un signal de haut niveau à partir d'un signal de très faible niveau, qui peut être par exemple délivré par un convertisseur numérique analogique; dans ce type de générateur, une ou plusieurs boucles de contrôle du courant de sortie et/ou de la tension de sortie et/ou de la puissance de sortie sont nécessaires; les inconvénients importants de ce type de générateur sont principalement leur faible rendement (50% environ) et la nécessité de les adapter en fonction de l'impédance de la charge; C'est pourquoi ils sont généralement utilisés dans les applications de faible puissance en général de l'ordre de quelques centaines de Watt au maximum.

Pour les applications de puissance nécessitant de fournir une tension de sortie dont la fréquence est variable et relativement élevée, avec un faible taux de distorsion et un bon rendement, il est connu d'utiliser un générateur comportant plusieurs ponts à quatre branches munies de commutateurs, lesquels ponts sont alimentés par une source de tension continue.

La demande de brevet FR 2245124 (SIEMENS) décrit et revendique un dispositif onduleur à tension alternative de sortie de forme approximativement sinusoïdale composé d'un certain nombre de tensions partielles de même fréquence et forme décalées en temps les unes par rapport aux autres et fournies par des onduleurs individuels qui fournissent chacun une tension partielle d'allure trapézoïdale par rapport au temps, avec une durée de montée ou de descente des flancs supérieure à 1/20ème de la 1/2 période de ladite tension partielle.

Le type d'onduleur constituant l'onduleur selon cette demande est d'un type connu qui génère un courant trapézoïdal de pente déterminée par la valeur d'un condensateur, et qui n'est donc pas utilisable en fréquence variable.

La demande de brevet FR 2349231 (THOMSON-CSF) décrit et revendique un dispositif générateur de signaux périodiques de puissance élevée, à fréquence variable et à haut' rendement, comportant une unité de commande fournissant des signaux pilotes commandant l'état d'éléments conducteurs connectés dans les branches d'un circuit en pont, dont une première diagonale est connectable par ses sommets à une source d'alimentation et dont les sommets d'une seconde diagonale sont connectables à une charge, tel que l'unité de commande comporte un générateur d'un signal périodique pilote, un moyen de mise en forme et de modulation en durée, un ensemble de répartitions par groupes des signaux de commande d'un même circuit en ponts dont plusieurs forment un moyen d'aiguillage, les ponts ayant les sommets desdites secondes diagonales couplés entre eux en formant une boucle fermée avec la charge, les paires d'éléments conducteurs des branches parallèles d'un pont étant rendues passants par la commande aiguillant séquentiellement les courants transmis, dont l'addition engendre un signal périodique dans ladite charge.

Cette demande mentionne à la page 7 un exemple de réalisation qui comporte huit circuits en ponts et qui peut fournir un signal sinusoïdal dont la tension de crête est susceptible de produire une puissance électrique efficace maximum de 5 Kw dans la gamme de fréquence de 2 kHz à 15 kHz et qui, utilisé sur une charge résistive pure produit une distorsion comprise entre 3 et 7 % et fonctionne avec un rendement supérieur à 90 %.

Il s'avère qu'on a de plus en plus souvent besoin pour des utilisations très diverses, de générateurs statiques de puissance dont les performances soient nettement supérieures aux performances atteintes par ces dispositifs connus: un problème posé est de procurer des générateurs statiques de puissance qui peuvent délivrer une forte puissance qui peut aller au-delà de 100 Kw, à des fréquences très variables notamment entre quelques Hertz et quelques dizaines de kHz, pour alimenter des charges qui ont une impédance variée et/ou variable; le problème posé consiste également à procurer des générateurs statiques de puissance qui ont un rendement supérieur à 90 %, un taux de distorsion inférieur à 2 % et de préférence inférieur à 1 % et qui de plus génèrent très peu de radiations électromagnétiques; le problème posé est également de procurer des générateurs statiques de puissance qui soient très fiables et très compacts et qui puissent éventuellement fonctionner en mode dégradé. Le problème posé consiste également à procurer des procédés d'utilisation de ces générateurs qui permettent d'utiliser ces générateurs dans des applications très diverses, notamment dans des applications nécessitant une modulation d'amplitude et/ou une modulation de fréquence avec des capacités de modulation importantes, et qui permettent de générer des signaux, notamment des signaux symétriques ou périodiques, avec ou sans composante continue, et ceci dans une très large bande de fréquence allant de 0 (courant continu) à 50 kHz environ.

Une solution au problème posé consiste à procurer un générateur statique de puissance comportant un nombre N de ponts à quatre branches, chaque branche comportant au moins un commutateur de puissance, lesquels ponts ont leur sortie raccordée en série, lesquels ponts sont alimentés en courant continu sur leurs entrées, tels que chacun desdits ponts est alimenté par une tension continue, laquelle tension continue est respectivement délivrée par un hacheur, et au moins un desdits hacheurs est contrôlé par un module numérique de commande de hacheur, et le générateur est tel que chacun desdits ponts est respectivement contrôlé par un module numérique de commande de ponts, lesquels modules numériques de commande de ponts sont pilotés par un contrôleur numérique de ponts, et ledit module numérique de commande de hacheur peut recevoir une consigne de tension de sortie de hacheur sous forme numérique, laquelle consigne numérique est véhiculée par un bus, de préférence un bus de type parallèle, de sorte que ledit générateur statique de puissance peut délivrer entre ses bornes de sortie tous types de signaux à tous types de charge, lesquels signaux peuvent varier très rapidement dans de larges bandes de fréquence et présentent un faible taux de distorsion.

Avantageusement, dans un générateur statique de puissance selon l'invention, chacun desdits hacheurs est respectivement contrôlé par un module numérique de commande de hacheur, lesquels modules de commande de hacheur peuvent recevoir respectivement une consigne de tension de sortie de hacheur sous forme numérique, laquelle consigne numérique est véhiculée par un bus commun auxdits modules de commande de hacheur.

Avantageusement, lesdits hacheurs fonctionnent à la même fréquence f₁ de hachage, laquelle fréquence est comprise entre 5 kHz et 200 kHz et de préférence comprise entre 10 kHz et 100 kHz, grâce à des signaux de hachage délivrés par un contrôleur de hacheur 12 commun à tous lesdits hacheurs, lesquels signaux de hachage ont pour fréquence ladite fréquence de hachage et sont décalés temporellement, d'au moins un pas de l'horloge de base, de sorte que les commandes d'ouverture et/ou de fermeture des interrupteurs desdits hacheurs ne sont pas simultanés.

Avantageusement, lesdits hacheurs sont du type série et ledit interrupteur de hacheur comporte au moins un transistor VMOS qui est commandé par l'intermédiaire d'une interface de commande de hacheur qui comporte des moyens d'isolement galvaniques et qui comporte de préférence au moins un découpleur opto-électronique, et lesdits hacheurs sont tels que la sortie dudit interrupteur peut être mise en court-circuit en cas de défaut secteur ou d'un défaut dudit interrupteur et lors de l'ouverture dudit interrupteur, par au moins un relais électromécanique, de manière à décharger le condensateur de filtrage de sortie dudit hacheur.

Avantageusement, ledit module numérique de commande de hacheur comporte au moins une mémoire-tampon qui peut recevoir ladite consigne numérique de tension de sortie de hacheur, et de préférence ledit module comporte une première mémoire-tampon et une deuxième mémoire-tampon au moins un décodeur d'adresse, au moins un soustracteur, un convertisseur analogique numérique, au moins un module proportionnel, au moins un module intégrateur, et de préférence ledit module numérique de commande de hacheur comporte un générateur de rampe et un comparateur.

Avantageusement, ledit transistor VMOS dudit interrupteur de hacheur est connecté en série avec une première diode, et une deuxième diode est montée en parallèle avec l'ensemble constitué par ledit transistor et ladite première diode, laquelle deuxième diode est montée dans le sens inverse du sens passant dudit transistor et évite ainsi l'apparition de tension inverse aux bornes dudit transistor, en laissant circuler les courants inverses qui peuvent apparaître notamment lorsque ladite charge devient générateur.

Avantageusement, chacun desdits modules de commande de ponts comporte pour chacune desdites 4 branches au moins un amplificateur respectif 69₁,...69₄ de commande desdits commutateurs de puissance 58, lequel amplificateur est respectivement commandé par l'intermédiaire d'un dispositif d'isolement galvanique 61₁,...61₄, et ledit générateur comporte pour chacune desdites branches 63₁,...63₄ desdits ponts au moins un module d'alimentation isolée qui peut alimenter respectivement lesdits dispositifs d'isolement galvanique et lesdits amplificateurs de commande, de sorte que le fonctionnement de l'amplificateur de commande d'une desdites branches ne perturbe pas le fonctionnement des amplificateurs de commande des autres branches desdits ponts dudit générateur.

Avantageusement, lesdits modules d'alimentation sont des convertisseurs alternatif/continu qui comportent un transformateur et qui sont alimentés par une tension primaire alternative dont la fréquence est comprise entre 1 kHz et 1 MHz et de préférence comprise entre 10 kHz et 250 kHz, de sorte que lesdits modules d'alimentation sont très compacts et parfaitement isolés les uns par rapport aux autres.

Avantageusement, lesdits commutateurs de puissance 58₁,...58₄ sont commandés par des signaux de commande respectivement 71a, 71a, 71b, 71b par l'intermédiaire de retardateurs respectifs 62₁,...62₄, lesquels retardateurs sont de préférence constitués par des cellules résistance/capacité, et la constante de temps T₃ desdits retardateurs desdits commutateurs de puissance des première et quatrième branches dudit pont est sensiblement égale, et la constante de temps T₄ desdits retardateurs desdits commutateurs de puissance 58₂, 58₃ desdites deuxième et troisième branches de chacun desdits ponts est sensiblement égale et légèrement différente de ladite constante de temps T₃, de sorte que les commandes d'ouverture et/ou de fermeture desdits commutateurs de puissance ne sont pas simultanées.

Avantageusement, lesdits commutateurs de puissance comportent au moins un transistor VMOS, et ledit générateur comporte en outre à l'entrée de chacun desdits commutateurs de puissance au moins une résistance directe 66 aux bornes de laquelle est connecté un ensemble comportant une résistance inverse 67 et une diode inverse 68 de manière à régler les fronts montants et descendants des signaux de commande pour limiter les pertes de commutation internes dudit commutateur.

Avantageusement, ledit nombre N est situe dans une plage allant de 2 à 20 et est de préférence supérieur à 4, et lesdits ponts 11₁,...11ₙ sont identiques, lesdits hacheurs 9₁,...9ₙ sont identiques et lesdits modules de commande de hacheur 10₁, ...10ₙ sont identiques.

Une solution au problème posé consiste également à procurer un procédé d'alimentation d'une charge qui comporte les opérations suivantes:
a - on procure un générateur statique de puissance selon l'invention que l'on raccorde par ses sorties à ladite charge,
b - on procure une unité de commande externe 18 munie d'une horloge 18a que l'on connecte audit bus 14 et audit contrôleur numérique de pont 17 dudit générateur statique de puissance,
c - on détermine et de préférence on détermine dans ladite unité de commande externe 18, ledit nombre N de relations temporelles de tension K₁(t),...Kₙ(t), et ledit nombre N de relations temporelles de sommation A₁(t),...Aₙ(t), en fonction de la relation temporelle U34(t) de la tension désirée pour alimenter ladite charge, de sorte que l'on obtient à chaque instant l'égalité entre la valeur prise par ladite relation temporelle de la tension désirée , et la somme des N valeurs prises audit instant par les produits K₁(t)A₁(t),...Kₙ(t)Aₙ(t) des valeurs prises par lesdites relations temporelles de tension et des valeurs prises par lesdites relations temporelles de sommation,
d - on exécute, de préférence à intervalles de temps réguliers, les opérations suivantes:
   d-1- on transmet respectivement auxdits modules numériques de commande hacheur, par l'intermédiaire dudit bus 14, la valeur prise par ladite relation temporelle de tension respectivement K₁,...Kₙ, laquelle valeur correspond respectivement à ladite consigne de tension de sortie de hacheur u₁,...uₙ,
   d-2- on transmet audit contrôleur numérique de commande de pont 17 la valeur prise par lesdites relations temporelles de sommation A₁,...Aₙ, lequel contrôleur numérique de commande de pont élabore en coopération avec lesdits modules numériques de commande de pont 8₁,...8ₙ les signaux 71 de commande desdits commutateurs de puissance.

Grâce au procédé selon l'invention, on peut alimenter une charge qui doit fonctionner à tension constante ou selon une loi de tension prédéterminée, sans qu'une boucle de contre-réaction de tension ne soit nécessaire, même sur une charge très déphasée; la tension de sortie d'un générateur selon l'invention qui est ajustée par un procédé d'alimentation selon l'invention, peut facilement alimenter une charge devant fonctionner à intensité constante ou à puissance constante à l'aide d'une simple mesure du courant ou du module de la charge.

Avantageusement, lesdits commutateurs d'un même bras de chacun desdits ponts sont commandés par un signal commun, l'un directement et l'autre par l'intermédiaire d'un inverseur, de sorte que lesdits commutateurs d'un même bras ne sont jamais commandés simultanément, ce qui pourrait être occasionné par une perturbation électro-magnétique desdits signaux de commande, et ce qui serait susceptible d'entraîner la destruction desdits commutateurs desdits ponts.

Avantageusement, ladite relation temporelle U34(t) de la tension d'alimentation désirée est périodique de période P et ladite unité de commande externe 18 comporte une mémoire dans laquelle peuvent être enregistrées les valeurs prises par lesdites relations temporelles de tension et lesdites relations temporelles de sommation pendant ladite période P.

Avantageusement, ladite charge est constituée par un émetteur, de préférence un émetteur sonar qui absorbe une puissance supérieure à 1 Kw et de préférence supérieure à 10 Kw.

Les avantages procurés par l'invention sont nombreux: en effet, grâce auxdits signaux de hachage délivrés par ledit contrôleur de hacheur, lesquels signaux de hachage ont pour fréquence ladite fréquence de hachage et sont décalés temporellement, et grâce audit retardateur desdits commutateurs de puissance desdites branches desdits ponts qui introduisent un décalage temporel entre les moments d'ouverture et/ou de fermeture desdits commutateurs de puissance, les rayonnement électromagnétiques émis par un générateur selon l'invention sont très faibles et le taux de distorsion du courant et/ou de la tension d'alimentation de ladite charge est également très faible; de plus, ce taux de distorsion est encore optimisé par le fait que l'on dispose de N étages dont les tensions s'ajoutent et qui permettent donc en fonction des ordres de commande desdits commutateurs de ponts, de moduler l'amplitude de la tension de sortie du générateur, et grâce également auxdits hacheurs contrôlés par lesdits modules numériques de commande de hacheur qui peuvent recevoir une consigne de tension de sortie de hacheurs sous forme numérique, laquelle consigne de tension de sortie de hacheurs peut par exemple être codée sur huit bits ce qui entraîne une précision sur la tension de sortie de chacun desdits hacheurs de l'ordre de 0,4 % et qui entraîne donc un très faible taux de distorsion de la tension de sortie du générateur.

Du fait de l'absence de transformateur de sortie de ponts et de l'utilisation de transistors VMOS en tant que commutateurs de puissance, les générateurs de puissance selon l'invention présentent une impédance de sortie voisine de zéro, ce qui permet une réponse très rapide aux variations de charge et permet de supporter des surcharges (charges supérieures à la charge nominale), et ce qui autorise leur utilisation pour alimenter des charges d'impédance variées et/ou variables et contribue également à la compacité des générateurs; par ailleurs, le fait de faire fonctionner lesdits hacheurs à une fréquence de hachage supérieure à 5 kHz et de préférence supérieure à 10 kHz, permet de délivrer une tension de sortie dans une très large plage de fréquences qui peut aller de quelques Hz à plusieurs dizaines de kHz; le fait d'utiliser ledit nombre N d'ensembles comportant un pont à commande numérique, un hacheur à commande numérique, lequel nombre N peut avantageusement être supérieur à 2 et de préférence supérieur à 4 et peut aller jusqu'à quelques dizaines, permet de délivrer de préférence avec lesdits ensembles constitués par lesdits ponts identiques et lesdits hacheurs identiques, des puissances très importantes qui peuvent dépasser 100 Kw. Dans le cas particulier d'utilisation de ponts identiques et de hacheurs identiques, la maintenabilité de générateurs selon l'invention est bien sûr améliorée.

La compacité des générateurs selon l'invention est encore améliorée lorsqu'on utilise selon l'invention, lesdits signaux de hachage ayant pour fréquence ladite fréquence de hachage supérieure à 5 kHz et qui peut avantageusement être voisine de 50 kHz, grâce aux performances des transistors VMOS notamment, ce qui permet d'utiliser des filtres de sortie de chacun desdits hacheurs qui sont de taille très réduite.

Par ailleurs, grâce à la structure entièrement numérique des moyens de commande desdits hacheurs et desdits ponts, on peut grâce à n'importe quel type d'unité de commande externe numérique, commander lesdits hacheurs et lesdits ponts de façon à générer tous types de tension d'alimentation, qu'elle soit périodique ou non, symétrique ou non, avec éventuellement des possibilités de contrôle par une boucle de régulation de la tension de sortie dudit générateur, ce qui permet notamment la génération d'un signal d'alimentation modulé en amplitude et en fréquence, par exemple pour alimenter des émetteurs sonar; la structure numérique des générateurs selon l'invention et leur procédé d'utilisation qui consiste à déterminer lesdites relations temporelles de tension et lesdites relations temporelles de sommation, permet, en cas de panne d'une partie au moins d'un desdits hacheurs, de fonctionner en mode dégradé en modifiant une partie au moins desdites relations temporelles de tension et de sommation.

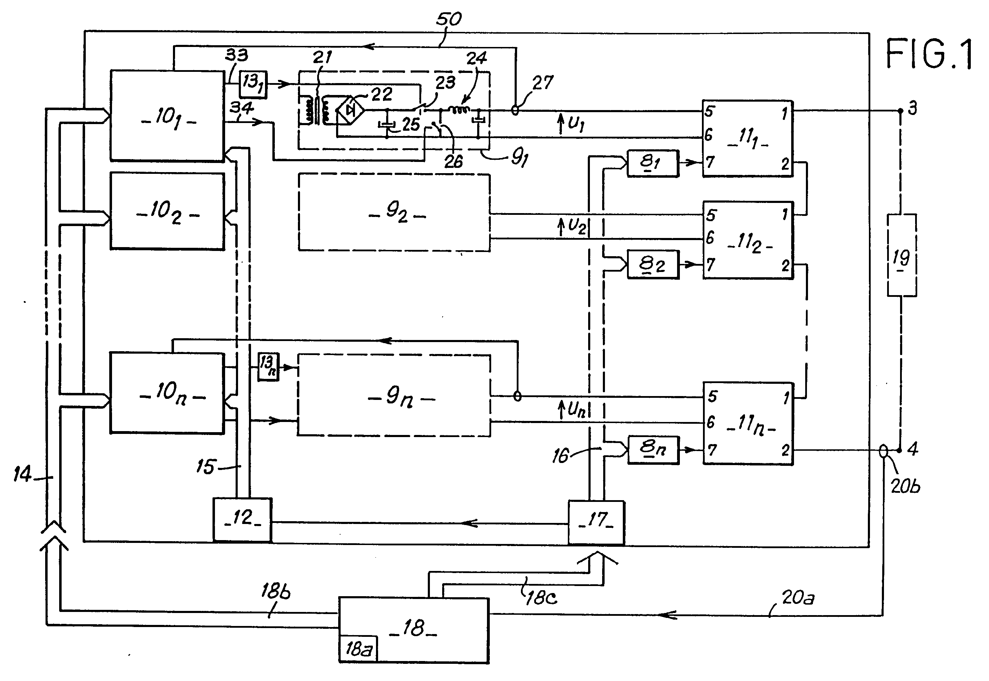

Les générateurs statiques de puissance selon l'invention ont de plus un très bon rendement: des essais effectués sur un exemple de réalisation du type de celui illustré à la figure 1 et équipé de huit ponts, ont mis en évidence un rendement, calculé par le rapport de la puissance active d'un signal sinusoïdal en sortie à la puissance active en entrée des transformateurs des hacheurs, supérieur à 92 % sur la fréquence fondamentale délivrée en sortie de générateurs et ceci, pour des fréquences de sortie allant de quelques centièmes de Hz à 10 kHz, ce rendement étant même supérieur à 95 % jusqu'à quelques centaines de Hz; sur cette réalisation, on a également mis en évidence un taux de distorsion de la tension de sortie inférieur à 1 %, et on a mesuré pour des tensions de sortie sinusoïdale, que le niveau des harmoniques de la fréquence fondamentale de la tension de sortie restait inférieur au millième du niveau de la fréquence fondamentale.

Les nombreux avantages procurés par l'invention seront mieux compris au travers de la description suivante, qui se réfère aux dessins annexés, qui représentent, sans aucun caractère limitatif, des modes particuliers de réalisation d'un dispositif générateur statique selon l'invention et certains procédés d'utilisation.

La figure 1 illustre un schéma d'ensemble d'un dispositif générateur statique de puissance selon l'invention selon un mode particulier de réalisation.

La figure 2 illustre un mode particulier de réalisation d'un module numérique de commande de hacheur selon l'invention.

La figure 3 illustre un mode particulier de réalisation d'un hacheur selon l'invention.

La figure 4 illustre un mode particulier de réalisation d'un desdits ponts et de son module de commande selon l'invention.

La figure 5 illustre un détail de réalisation d'un module de commande d'un pont d'un générateur statique de puissance selon l'invention.

Les figures 6A₁, 6B₁, 6A₂ et 6B₂ sont des chronogrammes illustrant certaines caractéristiques d'un dispositif selon l'invention et certaines opérations d'un procédé d'utilisation d'un générateur selon l'invention.

Sur la figure 1, on voit qu'un générateur statique de puissance selon l'invention comporte N ponts 11₁, 11₂ ...11ₙ, dont les bornes de sorties 1, 2 sont reliées en série, et dans lequel la borne 1 d'un pont 11₁ est reliée à une borne 3 qui constitue une première borne de sortie du générateur de puissance et dont la borne 2 dudit pont 11ₙ est reliée à une borne 4 qui constitue la deuxième borne de sortie d'un générateur de puissance selon l'invention; dans cette figure et les figure suivantes, on a illustré afin d'améliorer la clarté des dessins des générateurs statiques monophasés, mais il est clair que toutes les structures de l'invention peuvent être utilisées pour constituer des générateurs triphasés ou polyphasés.

Lesdites bornes de sortie 3 et 4 dudit générateur permettent d'alimenter une charge 19 qui peut être constituée par une charge résistive ou plus particulièrement un moteur ou un émetteur, par exemple un émetteur sonar.

On voit que chacun desdits ponts 11₁,...11ₙ est respectivement alimenté sur ses bornes d'entrée 5, 6 par une tension continue d'alimentation respectivement U₁, U₂...Uₙ; Lesdites tensions continues d'alimentation desdits ponts sont délivrées respectivement par des dispositifs hacheurs 9₁, 9₂...9ₙ; chacun desdits ponts est respectivement commandé par un module numérique de commande de ponts 8₁, 8₂...8ₙ, lesquels modules numériques de commande de ponts sont reliés par des moyens de liaison 16 tel qu'un bus par exemple à un contrôleur de pont 17.

On voit que chacun desdits hacheurs est relié par des moyens de liaison 33, 34, 50 à un module de commande numérique de hacheurs respectivement 10₁, 10₂...10ₙ; Avantageusement, le module numérique 10₁ de commande dudit hacheur 9₁, peut commander l'ouverture et la fermeture d'un interrupteur 23 de hacheur, par l'intermédiaire desdits moyens de liaison 33 et d'une interface 13₁ de commande de hacheur; ledit module numérique 10 peut également commander par l'intermédiaire desdits moyens de liaison 34 un relais électromécanique 26 de décharge.

On voit en effet que ledit hacheur 9₁ qui est du type série comporte ledit interrupteur de hacheur 23 qui découpe une tension continue fournie par exemple par un transformateur 21 qui peut être alimenté par une tension alternative et dont les sorties sont connectées à un pont de diodes 22 qui constitue un redresseur et dont la tension de sortie peut être filtrée par un condensateur 25, laquelle tension de sortie peut être hachée par ledit interrupteur 23; on voit qu'à la sortie dudit hacheur est prévu un filtre 24 qui comporte de façon connue une inductance et une capacité; on voit également que dans un mode préférentiel de réalisation, des moyens 27 de mesure de la tension de sortie dudit hacheur sont prévus qui sont reliés audit module 10 de commande numérique dudit hacheur par des moyens de liaison 50.

On voit que lesdits modules numériques de commande de hacheur 10₁, 10₂...10ₙ peuvent être relies à une unité externe de commande 18 par l'intermédiaire d'un bus commun 14 qui peut être connecte à ladite unité de commande externe par des moyens de connexion 18a. On voit également que ladite unité de commande externe 18 peut être reliée audit contrôleur de ponts 17 par des moyens de liaison 18c et que ledit contrôleur de ponts 17 peut communiquer avec un contrôleur de hacheurs 12, lequel contrôleur de hacheurs 12 peut générer des signaux de commande desdits modules numériques 10 qui sont véhiculés par un support 15 tel qu'un bus par exemple.

Avantageusement, le générateur statique selon l'invention est utilisé avec une boucle de réaction externe qui comporte des moyens de mesure de la tension et/ou de l'intensité absorbée par ladite charge qui sont repérés 20b sur la figure et qui sont reliés à ladite unité de commande externe 18 par des moyens de liaison 20a de sorte que ladite unité de commande externe peut piloter ledit générateur de puissance selon l'invention en régulant la tension et/ou l'intensité et/ou la puissance absorbée par ladite charge 19.

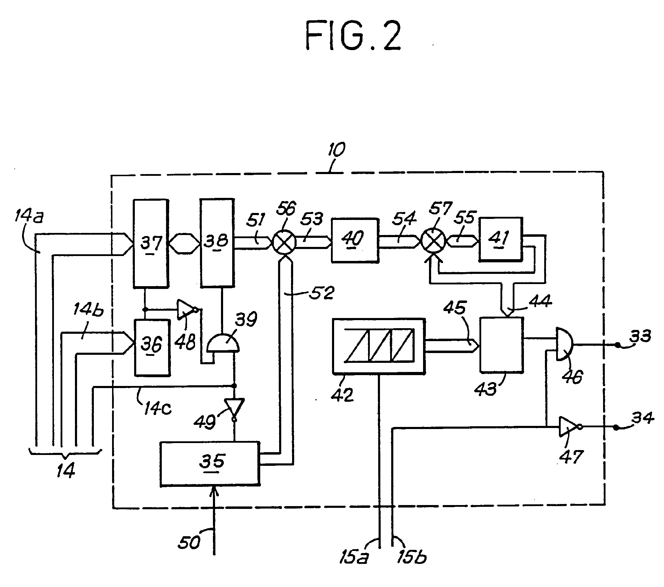

On voit sur la figure 2 que de façon préférentielle, un module 10 de commande numérique de hacheur comporte une première mémoire tampon 37, une deuxième mémoire tampon 38, un décodeur d'adresse 36; on voit que ladite première mémoire tampon 37 est reliée à une partie 14a dudit bus 14 et que ledit décodeur d'adresse 36 est relié à une partie 14b dudit bus 14 de sorte qu'on peut enregistrer dans ladite première mémoire tampon 37, une valeur de consigne u qui est véhiculée sur la partie 14a dudit bus 14 et de préférence ladite consigne est numérisée sur 8 bits et ledit bus est un bus parallèle; du fait de l'utilisation de ce bus parallèle sur lequel circulent lesdites consignes u₁,...uₙ de tension de sortie desdits hacheurs dudit générateur, il est nécessaire que chacun desdits modules numériques 10 de commande hacheur sélectionne uniquement ladite consigne qui lui est destinée, c'est pourquoi il est prévu que ledit bus 14 véhicule pour chacune desdites consignes une adresse correspondant à l'adresse du module numérique de commande auquel est destinée chacune desdites consignes; de ce fait, un décodeur d'adresse 36 peut recevoir lesdites adresses qui sont véhiculées sur ladite partie 14b dudit bus, et lorsque ledit décodeur d'adresses reçoit l'adresse particulière dudit module 10 de la figure 2, ledit décodeur d'adresses valide ladite consigne qui a été enregistrée dans ladite première mémoire tampon; ladite consigne est transmise à ladite deuxième mémoire tampon 38 et est validée par l'intermédiaire de moyens 48 et 39 par un signal d'horloge transmis par une partie 14c dudit bus 14; on voit que ledit signal d'horloge est également dirige par l'intermédiaire d'un inverseur 49 à un convertisseur analogique digital 35 qui reçoit par ledit moyen de liaison 50 une information analogique représentative de la tension mesurée à la sortie du hacheur contrôlé par le module numérique de la figure 2, laquelle valeur analogique est issue dudit moyen de mesure représente par le repère 27 sur la figure 1; de la sorte, ledit signal d'horloge transmis par ladite partie 14c dudit bus déclenche le fonctionnement dudit convertisseur analogique digital qui transmet par des moyens de liaison 52 la valeur numérisée de ladite tension mesurée à la sortie dudit hacheur et déclenche simultanément la transmission de ladite valeur de consigne enregistrée dans ladite deuxième mémoire tampon 38 à un soustracteur 56 par l'intermédiaire de moyens de liaison 51; de la sorte, on obtient à la sortie dudit soustracteur 56 une valeur numérique correspondant à la différence entre ladite valeur de consigne de tension de sortie de hacheur et la valeur mesurée à la sortie dudit hacheur, laquelle différence est appliquée à un module proportionnel 40 par l'intermédiaire de moyens de liaison 53 numériques; ledit module proportionnel 40 peut par exemple être constitué par un amplificateur numérique qui transforme ladite valeur numérique représentative de la différence qui est fournie par les moyens de liaison 53 et qui peut être avantageusement codée sur 8 bits, en une valeur numérique similaire mais qui est codée sur 10 bits et qui est transmise à un deuxième comparateur 57 qui est un comparateur additionneur, par l'intermédiaire de moyens de liaison 54; ladite valeur numérique représentative de ladite différence entre ladite tension mesurée et ladite consigne de tension, qui est codée sur 10 bits par exemple est transmise à un module intégrateur 41 qui compare ladite information numérique représentative de ladite différence avec la précédente valeur de ladite information numérique représentative de ladite différence et qui transmet ladite information numérique représentative de ladite différence à un comparateur 43 par l'intermédiaire de moyens de liaison numérique 44. On voit que ledit module de commande numérique 10 comporte également un générateur de rampe 42 qui fonctionne à partir d'un signal d'horloge fourni par ledit contrôleur de hacheur (repère 12 de la figure 1), par l'intermédiaire d'une partie 15a dudit bus repéré 15 sur la figure 1; ledit générateur de rampe 42 va élaborer une information numérique de signal periodique de forme triangulaire, qui pourra être par exemple discrétisée avec une résolution de 8 bits et représentant donc 255 niveaux, avec une période égale à la période du signal de hachage délivré par ledit contrôleur de hacheur, qui peut correspondre à une fréquence de hachage f₁ voisine de 40 à 50 kHz; la valeur de ladite rampe générée par ledit générateur de rampe est appliquée à une autre entrée dudit comparateur 43 par l'Intermédiaire de moyens de liaison numériques 45 et ledit comparateur 43 délivre le résultat de la comparaison entre les deux informations de signaux qui lui sont appliqués à une porte 46 qui transmet le résultat de ladite comparaison sur une borne 33 qui fait partie des moyens de liaison entre ledit module numérique de commande de hacheur et ladite interface 13 de commande de hacheur qui va commander ledit interrupteur de hacheur. On voit qu'avantageusement, ledit module 10 de commande numérique comporte également un inverseur 47 qui reçoit par l'intermédiaire d'une partie 15b dudit bus 15, de la part dudit contrôleur de hacheur (repère 12 de la figure 1), une information d'inhibition qui, en cas de détection d'anomalie de fonctionnement inhibera ledit signal de commande de ponts grâce à la liaison entre lesdits moyens 15b et ladite porte 46 et d'autre part enverra un signal d'inhibition par l'intermédiaire dudit inverseur 47 et d'une borne 34, à un relais électromécanique de décharge représenté par le repère 26 sur la figure 1.

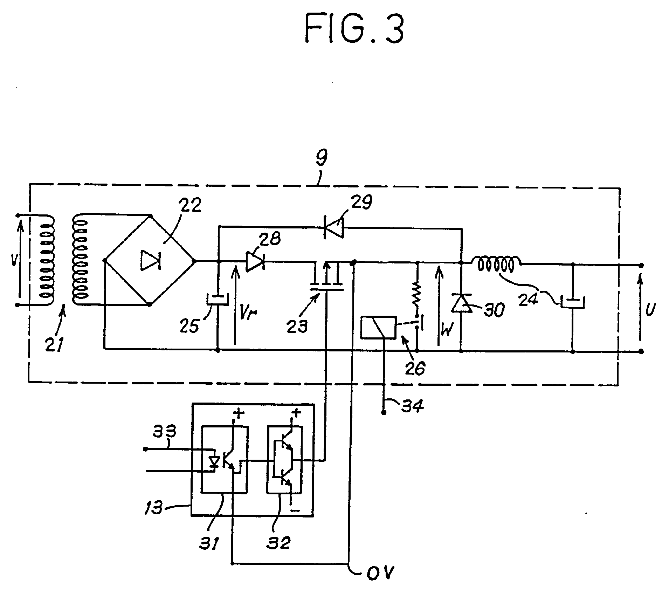

On voit sur la figure 3 qu'un desdits hacheurs 9 peut par exemple comporter un transformateur 21 qui est alimenté par une tension alternative V et qui fournit à un pont redresseur 22 une tension qui est redressée par ledit pont redresseur et qui est filtrée par une capacité 25; ladite tension redressée filtrée Vr est alors hachée par ledit interrupteur 23 de hacheur qui est avantageusement constitué par au moins un transistor VMOS, lequel transistor VMOS est commandé par lesdits signaux de commande délivrés par lesdits modules numériques 10 par l'intermédiaire d'une interface 13 de commande qui comporte avantageusement des moyens d'isolation galvaniques 31, par exemple un photocoupleur, et des moyens d'amplification 32 dudit signal de commande dudit interrupteur 23; on voit que ledit transistor 23 est connecte en série avec un diode 28, et l'ensemble constitué par ladite diode 28 et ledit transistor 23 est branché en parallèle avec une deuxième diode 29 qui permet d'éviter que ledit transistor soit soumis à des tensions inverses risquant de l'endommager, ceci afin de garantir une grande fiabilité au générateur; ladite tension continue Vr qui a été hachée par ledit transistor est ensuite délivrée à un filtre de sortie 24 qui comprend une inductance et une capacité de sorte que l'on dispose à la sortie dudit hacheur une tension continue U dont l'amplitude est fixée à une valeur déterminée grâce auxdits moyens de commande numériques dudit interrupteur dudit hacheur; Avantageusement, une diode est montée en parallèle sur la sortie dudit hacheur ainsi qu'un relais électromécanique 26 qui permet de court-circuiter la sortie dudit hacheur en cas de défaut et ouverture dudit interrupteur.

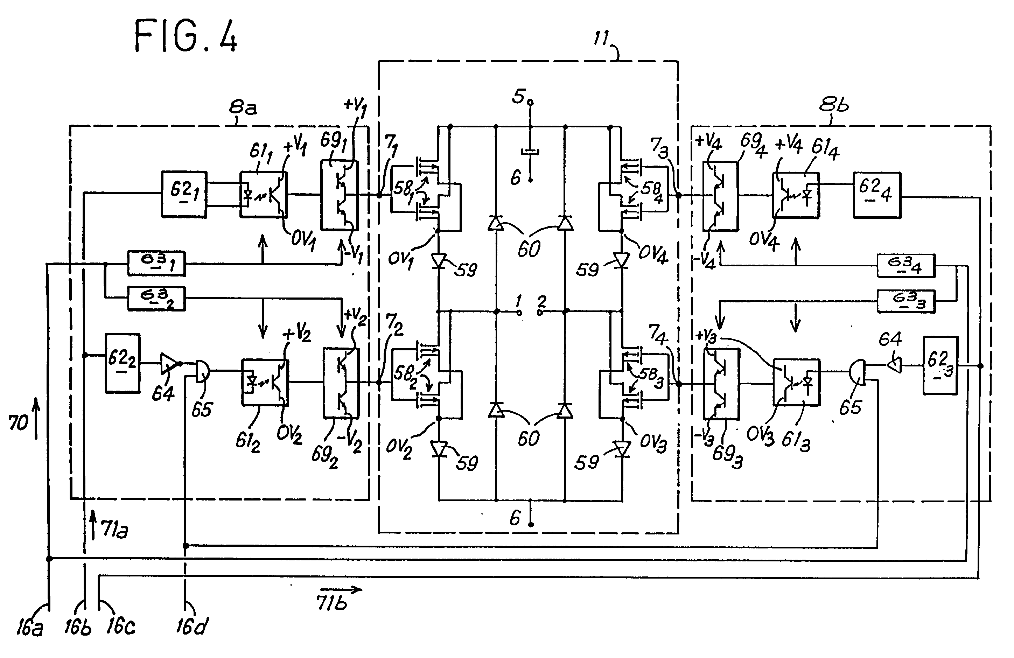

Sur la figure 4 on a représenté une partie d'un module numérique 8 de commande de pont 11 qui comprend deux parties 8a et 8b sensiblement identiques; on voit que ledit pont est constitué de manière connue par quatre branches qui comportent chacune au moins deux transistors montés en parallèle qui constituent un commutateur de puissance 58, et une diode 59; on voit que les quatre branches dudit pont sont reliées par deux de leurs extrémités en diagonale 5 et 6 à la sortie dudit hacheur correspondant audit pont qui alimente par ces bornes 5 et 6 ledit pont, et que les bornes 1 et 2 de l'autre diagonale dudit pont constituent les bornes de sortie dudit pont; on voit que lesdits commutateurs 58 qui sont avantageusement constitués par des transistors VMOS, sont commandés par des signaux de commande issus d'un amplificateur 69, lequel amplificateur 69 reçoit des signaux de commande 71a, 71b par l'intermédiaire d'un retardateur 62 et d'un moyen d'isolement galvanique 61 par exemple du type opto-coupleur; lesdits signaux de commande 71a et 71b correspondant auxdites parties 8a et 8b dudit module numérique de commande de pont sont transmis par l'intermédiaire de parties 16b et 16c desdits moyens de liaison 16 entre lesdits modules numériques de commande de pont et ledit contrôleur de pont repéré 17 sur la figure 1; on voit sur la figure 4 que des modules d'alimentation 63₁, 63₂, 63₃, 63₄ sont prévus pour alimenter respectivement lesdits amplificateurs 69₁,...69₄ de commande desdits commutateurs de puissance, lesquels modules d'alimentation 63 sont alimentés par une tension primaire 70 qui est avantageusement une tension alternative de fréquence relativement élevée par exemple de l'ordre de 100 kHz, laquelle tension primaire 70 est délivrée auxdits modules d'alimentation 63 par l'intermédiaire de moyens de liaison 16a entre lesdits modules d'alimentation et ledit contrôleur de pont repéré 17 sur la figure 1; de la sorte, lesdits modules d'alimentation qui comportent avantageusement un transformateur suivi d'un redresseur sont d'une part très compacts du fait de la fréquence élevée de ladite tension primaire et permettent de délivrer des tensions respectives d'alimentation +V₁, OV₁, -V₁, +V₂, OV₂, -V₂, +V₃, OV₃, -V₃, +V₄, OV₄, -V₄, auxdits amplificateurs 69 et auxdits moyens d'isolement galvanique 61, lesquelles tensions sont parfaitement isolées les unes par rapport aux autres grâce à la présence desdits transformateurs desdits modules d'alimentation; de la sorte, on évite toute possibilité de couplage entre lesdits amplificateurs de commandes 69 qui seraient susceptibles de provoquer des dysfonctionnements dans les commandes desdits interrupteurs de puissance 58 et de provoquer leur destruction éventuelle.

Lesdits retardateurs 62 sont avantageusement constitués de cellules comportant au moins une résistance et une capacité, de préférence à des circuits numériques, car dans le cas d'utilisation de circuits numériques qui seraient scrutés à une fréquence fonction de la fréquence de sortie désirée, ce qui introduirait un retard variable avec la fréquence de sortie.

En effet, lesdits retardateurs sont des circuits destinés à éviter la mise en conduction d'un commutateur dudit pont tant que le commutateur du même bras dudit pont n'est pas correctement stoppé ou mis hors conduction, afin de permettre la libération complète de toutes les charges recouvrées.

Les caractéristiques desdits retardateurs sont donc liés essentiellement aux performances électriques desdits commutateurs de puissance et non à la fréquence du signal de sortie desdits générateurs. Avantageusement, les retards générés dans les signaux de commande par lesdits retardateurs seront de l'ordre de la microseconde et seront ajustés pour les fronts montants et descendants desdits signaux de commande par le choix des valeurs desdites résistances et capacités les constituant. On voit sur la figure 4 qu'avantageusement, des diodes série 59 sont disposées en série avec chacun desdits commutateurs, dans chaque branche dudit pont et que des diodes parallèles 60 sont également prévues en parallèle avec chacun desdits commutateurs dans chaque bras dudit pont; en effet, lesdites diodes parallèles 60 permettront audit générateur de puissance de supporter une charge qui peut devenir générateur, auquel cas le courant rejecté par ladite charge pourra être canalisé par lesdits condensateurs faisant partie desdits filtres de sortie desdits onduleurs, même lorsque ledit pont est au repos; lesdites diodes série 59 permettent aussi d'éviter que lesdits transistors constituant lesdits commutateurs de puissance soient soumis à des surtensions inverses et consécutivement à des échauffements anormaux, lesquelles diodes série sont quasiment obligatoires lorsque la charge alimentée par ledit générateur n'est pas purement résistive.

On voit également sur la figure 4 que des moyens de liaison 16d sont prévus qui permettent de relier des portes 65 auxdits contrôleurs de pont qui permettent de véhiculer un signal d'inhibition provoquant l'arrêt du fonctionnement dudit pont. On voit également sur cette figure que chacune desdites parties 8a et 8b qui est respectivement commandée par les signaux 71a et 71b qui sont respectivement véhiculés par lesdits moyens de liaison 16b et 16c permettent d'éviter qu'en cas de pollution électro-magnétique desdits signaux 71a par exemple, ladite pollution n'entraîne un dysfonctionnement dans les ouvertures et fermetures des commutateurs commandés par lesdits signaux 71a en l'occurrence les commutateurs 58₁ et 58₂, du fait que lesdits commutateurs sont commandés par un signal commun 71a.

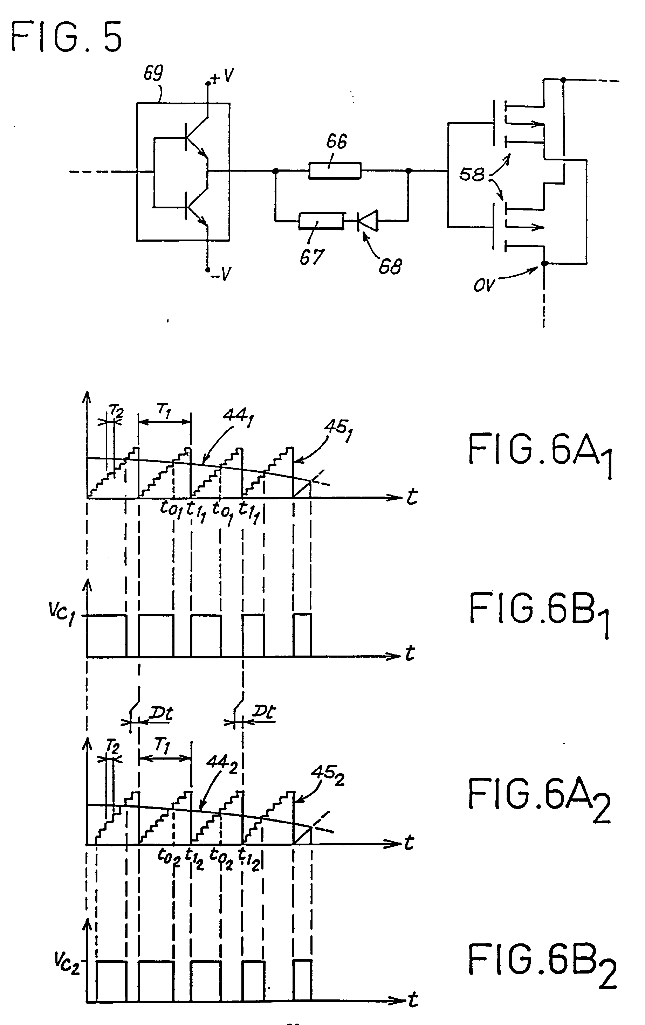

Dans la figure 5, on voit que dans un mode préférentiel de réalisation de la liaison entre lesdits modules numériques de commande de ponts et lesdits commutateurs de puissance 58, on intercale en série entre ledit amplificateur de commande 69 et lesdits commutateurs de puissance, une résistance directe 66, aux bornes de laquelle est raccordé un ensemble constitué par la mise en série d'une résistance inverse 67 et d'une diode inverse 68.

En effet, il est nécessaire de maîtriser le comportement dynamique des transistors VMOS constituant lesdits commutateurs de puissance, lors de leur mise en conduction et de l'arrêt de leur conduction, particulièrement lorsque lesdits commutateurs de puissance comportent chacun plusieurs transistors VMOS mis en parallèle; par ailleurs, il est intéressant de maîtriser les pertes de commutation de ces transistors; selon l'invention, la valeur de ladite résistance directe 66 détermine la durée du front de montée ou de mise en conduction desdits transistors, durant laquelle le courant de commande passe de la borne +V dudit amplificateur de commande 69 aux grilles desdits transistors, par l'intermédiaire de ladite résistance directe 66; lors de la mise en conduction, la durée du front descendant est déterminée par ladite résistance inverse 67 mise en parallèle avec ladite résistance directe 66, le courant de commande passant alors desdites grilles desdits transistors vers la borne -V dudit amplificateur de commande 69; il est intéressant de choisir les valeurs des tensions +V et -V afin d'augmenter la fiabilité de la commande desdits transistors, lesdites tensions +V et -V étant déterminées par la tension maximale que peut supporter la grille desdits transistors, ladite tension -V étant déterminée par rapport au potentiel OV auquel est maintenue l'électrode de source desdits transistors.

Sur les figures 6B₁ et 6B₂, on a représenté des chronogrammes de signaux de commande de hacheur tels que délivrés respectivement par un premier module de commande de hacheur (illustré à la figure 2) et un deuxième module de commande de hacheur d'un même générateur selon l'invention.

Sur les figures 6A₁, 6B₁, 6A₂, 6B₂, l'axe des abscisses représente le temps et l'axe des ordonnées représente des tensions.

Sur la figure 6A₁, on a illustré par une courbe 44₁ sensiblement plate et décroissante, l'image analogique de ladite information numérique représentative de la différence entre la tension mesurée en sortie du hacheur correspondant audit premier module de commande de hacheur et la consigne de tension qui est reçue par ledit module de commande, laquelle information numérique est délivrée par ledit module intégrateur (repère 41 de la figure 2) audit comparateur (repère 43 de la figure 2) par l'intermédiaire desdits moyens de liaison numérique (repère 44 de la figure 2); sur la figure 6A₁, on a également représenté une courbe 45₁ qui est l'image analogique d'une information de signal périodique de forme triangulaire qui est générée par ledit générateur de rampe (repère 42 de la figure 2), lequel signal periodique a une période T₁; on voit que ledit générateur de rampe élabore ladite information de signal périodique, qui est discrétisée par exemple avec une résolution de 8 bits, ce qui fait que ledit signal periodique de forme triangulaire comporte pour chaque periode T₁ une rampe ascendante munie par exemple de 255 niveaux ou paliers, laquelle rampe est suivie par une remise à zéro dudit signal periodique de forme triangulaire; on voit que chacun desdits paliers ou niveaux a une durée T₂ de préférence uniforme et qui dans le cas d'un générateur de rampe discrétisant ledit signal périodique avec une résolution de 8 bits aura une valeur égale à ladite période T₁ divisée par 256; ladite période T₁ est de préférence ladite période de hachage qui correspond à ladite fréquence de hachage F₁ qui est de préférence de l'ordre de 40 kHz; on voit sur les figures 6A₁ et 6B₁, que lorsque ladite courbe 44₁ coupe ladite courbe 45₁, ce qui correspond à un changement de signe de la différence entre ladite information numérique représentative de la différence, laquelle information numérique est délivrée par ledit module intégrateur (repère 41 de la figure 2) et ledit signal périodique discrétisé généré par ledit générateur de rampe, lesquelles informations sont appliquées aux entrées dudit comparateur (repère 43 de la figure 2), ce changement de signe de cette différence provoque le changement d'état de la sortie dudit comparateur et provoque ainsi à l'instant t0₁ le passage de la tension de sortie dudit comparateur (repère 43 de la figure 2), d'un niveau de tension Vc₁ à un niveau de tension sensiblement nul et, inversement, lorsque ladite différence change à nouveau de signe à l'instant t1₁, ce changement de signe détecté par ledit comparateur (repère 43 de la figure 2) provoque à nouveau le changement d'état de la sortie dudit comparateur, en l'occurrence provoque le passage d'une tension de sortie sensiblement nulle à une tension de sortie audit niveau Vc₁, tel que représenté à la figure 6B₁.

Ainsi, dans un mode particulier de réalisation où ladite fréquence de hachage est égale à 40 kHz, ladite période T₁ a une valeur de 25 microsecondes et chacun desdits paliers a une durée T₂ sensiblement égale à 100 nanosecondes. On voit sur la figure 6A₁ que ledit instant T0₁ déterminé par l'intersection desdites courbes 44₁ et 45₁, est ainsi déterminé avec la précision de la durée d'un palier soit environ 100 nanosecondes.

A la sortie dudit comparateur (repère 43 de la figure 2) qui dispose à une de ses entrées d'une information numérique correspondant audit signal périodique triangulaire et qui dispose à une autre entrée de ladite information représentative de ladite différence, génère un signal ou créneau de forme rectangulaire représenté à la figure 6B₁, chacun desdits créneaux dudit signal rectangulaire passant d'une valeur de tension sensiblement nulle à une valeur de tension repérée Vc₁ audit instant t1₁ correspondant à la remise à zéro dudit signal triangulaire, et a un front descendant audit instant T0₁ correspondant à l'intersection desdites courbes 44₁ et 45₁ de la figure 6A₁; la fermeture dudit interrupteur dudit hacheur commandé par ledit module numérique de commande de hacheur correspondant audit potentiel Vc₁, le temps de fermeture dudit interrupteur de hacheur correspondra à la durée d'établissement à ladite tension Vc₁ dudit signal de commande en forme de créneau. On voit sur les figures 6A₁ et 6B₁ que la durée dudit créneau est une fonction croissante de ladite valeur numérique représentative de ladite différence; dans un cas particulier, si ladite information numérique correspondant à ladite différence représentée par ladite courbe 44₁ à la figure 6A₁, s'établit une tension telle que ladite courbe 44₁ soit située au-dessus de ladite courbe 45₁ dudit signal triangulaire, ledit signal de commande s'établira à ladite valeur Vc₁ de façon continue pendant plusieurs desdites périodes T₁, ce qui fait que ledit interrupteur de hacheur sera commandé ou fermé en permanence.

On voit que de la même façon, aux figures 6A₂ et 6B₂ où sont représentées de façon analogue aux figures 6A1 et 6B1, les images analogiques 44₂ et 45₂ respectivement de ladite information numérique représentative de ladite différence et de ladite information de signal périodique de forme triangulaire délivrée par un deuxième module numérique de commande de hacheur (repère 10 de la figure 2), d'un même générateur, lesdits changements de signes de la différence entre lesdites informations de signaux 44₂ et 45₂, aux instants T0₂ et T1₂, provoquent de la même façon le changement d'état des tensions de sortie qui passent respectivement d'un niveau de tension de sortie Vc₂ à un niveau sensiblement nul et inversement qui passent d'un niveau de tension de sortie sensiblement nul à un niveau de tension de sortie égal à Vc₂; les signaux de forme sensiblement rectangulaire représentés aux figures 6B₁ et 6B₂ correspondent aux signaux de commande dudit interrupteur de chacun desdits hacheurs, délivrés respectivement par lesdits modules numériques de commande de hacheur; on voit qu'avantageusement selon l'invention, un décalage temporel Dt est prévu entre lesdits signaux periodiques de forme triangulaire appliqué d'une part audit premier module numérique de commande de hacheur qui génère les signaux de la figure 6A₁ et audit deuxième module numérique de commande de hacheur qui génère les signaux représentés à la figure 6A₂ de sorte que lesdits signaux de sortie desdits modules de commande numérique de hacheur qui sont représentés aux figures 6B₁ et 6B₂ respectivement sont également décalés temporellement d'une valeur Dt, ce qui fait que les instants de commandes desdits interrupteurs respectifs desdits hacheurs commandés par lesdits modules sont décalés dans le temps, de sorte que les perturbations électromagnétiques engendrées par lesdites commutations desdits interrupteurs sont amoindries.

## Revendications

1. Générateur statique de puissance comportant un nombre N de ponts (11₁,...11ₙ) à 4 branches, chaque branche comportant au moins un commutateur de puissance (58), lesquels ponts ont leurs sorties (1,2) raccordées en série, lesquels ponts sont alimentés en courant continu sur leurs entrées (5, 6) caractérisé en ce que lesdits ponts sont alimentés par des tensions continues respectives (U₁,... Uₙ) délivrées respectivement par des hacheurs (9₁,... 9ₙ), et au moins un desdits hacheurs est contrôlé par un module numérique de commande de hacheur (10), et en ce que chacun desdits ponts est respectivement contrôlé par un module numérique (8₁,... 8ₙ) de commande de pont, lesquels modules de commande de pont sont pilotés par un contrôleur numérique de ponts (17), lequel module numérique de commande de hacheur (10) peut recevoir une consigne numérique de tension de sortie de hacheur.

2. Générateur selon la revendication 1 caractérisé en ce que tous lesdits hacheurs fonctionnent à la même fréquence (f₁) de hachage, comprise entre 5 kHz et 200 kHz, grâce à des signaux (45) de hachage délivrés par un contrôleur de hacheur (12) commun à tous lesdits hacheurs, lesquels signaux de hachage ont pour fréquence ladite fréquence de hachage et sont décalés temporellement.

3. Générateur selon l'une quelconque des revendications 1 à 2 caractérisé en ce que lesdits hacheurs sont du type série et ledit interrupteur de hacheur (23) comporte au moins un transistor VMOS qui est commandé par l'intermédiaire d'une interface 13 de commande de hacheur qui comporte des moyens d'isolement galvanique (31).

4. Générateur selon l'une quelconque des revendications 1 à 3 caractérisé en ce que ledit module numérique de commande de hacheur (10) comporte au moins une mémoire-tampon qui peut recevoir ladite consigne numérique de tension de sortie de hacheur et de préférence ledit module comporte une première mémoire-tampon (37) et une deuxième mémoire-tampon (38) au moins un décodeur d'adresse (36), au moins un soustracteur (56), un convertisseur analogique numérique (35), au moins un module proportionnel (40), au moins un module intégrateur (41), et de préférence ledit module numérique de commande de hacheur comporte un générateur de rampe (42) et un comparateur (43).

5. Générateur selon l'une quelconque des revendications 3 à 4 caractérisé en ce que ledit transistor VMOS est connecté en série avec une première diode (28) et en ce qu'une deuxième diode (29) est montée en parallèle avec l'ensemble constitué par ledit transistor et ladite première diode, laquelle deuxième diode est montée dans le sens inverse du sens passant dudit transistor et évite ainsi l'apparition de tension inverse aux bornes dudit transistor.

6. Générateur selon l'une quelconque des revendications 1 à 5 caractérisé en ce que chacun desdits modules (8) de commande de ponts comporte pour chacune desdites 4 branches au moins un amplificateur respectif (69₁,...69₄) de commande desdits commutateurs de puissance (58), lequel amplificateur est respectivement commandé par l'intermédiaire d'un dispositif d'isolement galvanique (61₁,...61₄), et en ce que ledit générateur comporte pour chacune desdites branches desdits ponts au moins un module (63₁,...63₄) d'alimentation isolée qui peut alimenter respectivement lesdits dispositifs d'isolement galvanique et lesdits amplificateurs de commande.

7. Générateur selon la revendication 6 caractérisé en ce que lesdits modules d'alimentation sont des convertisseurs alternatif/continu qui comportent un transformateur et qui sont alimentés par une tension primaire (70) alternative dont la fréquence est comprise entre 1 kHz et 1 MHz.

8. Générateur selon l'une quelconque des revendications 1 à 7 caractérisé en ce que lesdits commutateurs de puissance (58₁,..58₄) sont commandés par des signaux de commande respectivement (71a, 71a, 71b, 71b) par l'intermédiaire de retardateurs (62₁,...62₄), et en ce que la constante de temps (T₃) desdits retardateurs desdits commutateurs de puissance des première et quatrième branches dudit pont est sensiblement égale, et en ce que la constante de temps (T4) desdits retardateurs desdits commutateurs de puissance (58₂, 58₃) desdites deuxième et troisième branches de chacun desdits ponts est sensiblement égale et légèrement différente de ladite constante de temps (T₃).

9. Générateur selon l'une quelconque des revendications 1 à 8 caractérisé en ce que lesdits commutateurs de puissance comportent au moins un transistor VMOS et ledit générateur comporte en outre à l'entrée de chacun desdits commutateurs de puissance au moins une résistance directe (66) aux bornes de laquelle est connecté un ensemble comportant une résistance inverse (67) et une diode inverse (68).

10. Générateur selon l'une quelconque des revendications 1 à 9 caractérisé en ce que ledit nombre n est situé dans une plage allant de 2 à 20 et de préférence supérieur à 4, et en ce que lesdits ponts (11₁,...11ₙ) sont identiques, lesdits hacheurs (9₁,...9ₙ) sont identiques et lesdits modules de commande de hacheur (10₁,...10ₙ) sont identiques.

11. Procédé d'alimentation d'une charge (19) caractérisé en ce qu'il comporte les opérations suivantes:
a - on procure un générateur statique de puissance selon l'une quelconque des revendications 1 à 10, que l'on raccorde par ses sorties (3, 4) à ladite charge,
b - on procure une unité de commande externe (18) munie d'une horloge (18a) que l'on connecte audit bus (14) et audit contrôleur numérique de pont (17) dudit générateur statique de puissance,
c - on détermine et de préférence on détermine dans ladite unité de commande externe (18), ledit nombre N de relations temporelles de tension (K₁(t),...Kₙ(t)), et ledit nombre N de relations temporelles de sommation, (A₁(t),...Aₙ(t)), en fonction de la relation temporelle (U34(t)) de la tension désirée pour alimenter ladite charge, de sorte que l'on obtient à chaque instant l'égalité entre la valeur prise par ladite relation temporelle de la tension désirée , et la somme des N valeurs prises audit instant par les produits K₁(t)A₁(t),...Kₙ(t)Aₙ(t) des valeurs prises par lesdites relations temporelles de tension et des valeurs prises par lesdites relations temporelles de sommation,
d - on exécute, de préférence à intervalles de temps réguliers, les opérations suivantes:
d-1- on transmet respectivement auxdits modules numériques de commande hacheur, par l'intermédiaire dudit bus (14), la valeur prise par ladite relation temporelle de tension respectivement (K₁,...Kₙ), laquelle valeur correspond respectivement à ladite consigne de tension de sortie de hacheur (u₁,...uₙ),
d-2- on transmet audit contrôleur numérique de commande de pont (17) la valeur prise par lesdites relations temporelles de sommation (A₁,...Aₙ), lequel contrôleur numérique de commande de pont élabore en coopération avec lesdits modules numériques de commande de pont (8₁,...8ₙ) les signaux (71) de commande desdits commutateurs de puissance.

12. Procédé selon la revendication 11 caractérisé en ce que ladite relation temporelle (U34(t)) de la tension d'alimentation désirée est périodique de période P et en ce que ladite unité de commande externe (18) comporte une mémoire dans laquelle peuvent être enregistrées les valeurs prises par lesdites relations temporelles de tension et lesdites relations temporelles de sommation pendant ladite période (P).

13. Procédé selon l'une quelconque des revendications 11 à 12 caractérisé en ce que ladite charge est constituée par un émetteur, de préférence un émetteur sonar, lequel émetteur est susceptible d'absorber une puissance supérieure à 1 Kw et de préférence supérieure à 10 Kw.

14. Procédé selon l'une quelconque des revendications 11 à 13 caractérisé en ce que lesdits commutateurs (58₁, 58₂), respectivement (58₃, 58₄), d'un même bras de chacun desdits ponts, sont commandés par un signal commun (71a), respectivement (71b), l'un directement et l'autre par l'intermédiaire d'un inverseur (64), de sorte que lesdits commutateurs d'un même bras ne sont jamais commandés simultanément.

## Patentansprüche

1. Statischer Leistungsgenerator, bestehend aus einer Anzahl von N Brücken (11₁, ... 11ₙ) mit 4 Zweigen, wobei jeder Zweig mindestens einen Leistungsschalter (58) aufweist, wobei die Brücken mit ihren Ausgängen (1, 2) in Reihe geschaltet sind wobei die Brücken an ihren Eingängen (5, 6) mit Gleichstrom versorgt werden,
dadurch gekennzeichnet, daß die genannten Brücken mit jeweiligen Gleichspannungen (U₁ , ... Uₙ) versorgt sind, die jeweils von Zerhackern (9₁, ... 9ₙ) abgegeben werden, und mindestens einer der genannten Zerhacker von einem numerischen Zerhackersteuermodul (10) gesteuert wird, und daß jede der genannten Brücken von einem jeweiligen numerischen Modul (8₁, ... 8ₙ) zur Steuerung von Brücken gesteuert wird, wobei diese Brückensteuerungsmodule von einem numerischen Brückenüberwachungsgerät (17) gesteuert werden wobei das numerische Zerhackersteuermodul (10) einen numerischen Einstellwert der Zerhackerausgangsspannung empfangen kann.

2. Generator nach Anspruch 1,
dadurch gekennzeichnet, daß aufgrund von Zerhackersignalen (45), die von einem Zerhackerüberwachungsgerät (12) abgegeben werden, das für alle genannten Zerhacker gemeinsam ist alle genannten Zerhacker mit der gleichen Zerhackerfrequenz (f1) arbeiten, die zwischen 5 kHz und 200 kHz liegt, wobei diese Zerhackersignale als Frequenz die genannte Zerhackerfrequenz haben und zeitlich verschoben sind.

3. Generator nach einem der Ansprüche 1 bis 2,
dadurch gekennzeichnet, daß die genannten Zerhacker serielle Zerhacker sind und der genannte Zerhackerschalter (23) mindestens einen VMOS-Transistor enthält, der über eine Schnittstelle 13 zur Zerhackersteuerung gesteuert wird, die Mittel zur galvanischen Isolierung (31) aufweist.

4. Generator nach einem der Ansprüche 1 bis 3,
dadurch gekennzeichnet, daß das genannte numerische Zerhakkersteuermodul (10) mindestens einen Pufferspeicher aufweist, der den genannten numerischen Einstellwert der Zerhackerausgangsspannung aufnehmen kann, und vorzugsweise weist das gennante Modul einen ersten Pufferspeicher (37) und einen zweiten Pufferspeicher (38), mindestens einen Adressen-Dekoder (36), mindestens einen Subtrahierer (56), einen Analog-Digital-Umsetzer (35), mindestens ein Proportionalmodul (40), mindestens ein Integriermodul (41), auf, und vorzugsweise weist das genannte numerische Zerhackersteuermodul einen Rampengenerator (42) und einen Komparator (43) auf.

5. Generator nach einem der Ansprüche 3 bis 4,
dadurch gekennzeichnet, daß der genannte VMOS-Transistor mit einer ersten Diode (28) in Reihe geschaltet ist und daß eine zweite Diode (29) zu der Gesamtanordnung, die aus dem genannten Transistor und der genannten ersten Diode besteht, parallel geschaltet ist, wobei diese zweite Diode in umgekehrter Richtung zur Durchlaßrichtung des genannten Transistors angeordnet ist und damit des Anliegen von umgekehrter Spannung an den Anschlüssen des genannten Transistors verhindert.

6. Generator nach einem der Ansprüche 1 bis 5,
dadurch gekennzeichnet, daß jedes der genannten Module (8) zur Steuerung von Brücken für jeden der genannten 4 Zweige mindestens einen Verstärker (69₁, ... 69₄) zur Steuerung der genannten Leistungsschalter (58) aufweist, wobei dieser Verstärker jeweils über eine Vorrichtung zur galvanischen Isolierung (61₁, ... 61₄) gesteuert wird, und daß der genannte Generator für jeden der genannten Zweige der genannten Brücken minmdestens ein Modul (63₁, ... 63₄) zur getrennten Versorgung aufweist, daß die genannten Vorrichtungen zur galvanischen Isolierung und die genannten Steuerungsverstärker jeweils versorgen kann.

7. Generator nach Anspruch 6,
dadurch gekennzeichnet, daß die genannten Versorgungsmodule aus Wechselstrom/Gleichstrom-Umformern bestehen, die einen Transformator aufweisen und durch eine Primärwechselspannung (70) mit einer Frequenz von 1 kHz bis 1 MHz versorgt sind.

8. Generator nach einem der Ansprüche 1 bis 7,
dadurch gekennzeichnet, daß die genannten Leistungsschalter (58₁, ... 58₄) über Verzögerer (62₁, ... 62₄) durch jeweilige Steuersignale (71a, 71a, 71b, 71b) gesteuert werden, und daß die Zeitkonstante (T₃) der genannten Verzögerer der genannten Leistungsschalter des ersten und des vierten Zweigs der genannten Brücke im wesentlichen gleich ist, und daß die Zeitkonstante (T₄) der genannten Verzögerer der genannten Leistungsschalter (58₂, 58₃) des genannten zweiten und dritten Zweigs jeder der genannten Brücken im wesentlichen gleich und leicht abweichend von der genannten Zeitkonstante (T₃) ist.

9. Generator nach einem der Ansprüche 1 bis 8,
dadurch gekennzeichnet, daß die genannten Leistungsschalter mindestens einen VMOS-Transistor aufweisen und der genannte Generator ferner am Eingang jedes der genannten Leistungsschalter mindestens einen direkten Widerstand (66) aufweist, an dessen Klemmen eine Anordnung angeschlossen ist, die aus einem umgekehrt gerichteten Widerstand (67) und einer umgekehrt gerichteten Diode (68) besteht.

10. Generator nach einem der Ansprüche 1 bis 9,
dadurch gekennzeichnet, daß die genannte Anzahl n in einem Bereich von 2 bis 20 liegt und vorzugsweise größer als 4 ist, und daß die genannten Brücken (11₁, ... 11ₙ) identisch sind, die genannten Zerhacker (9₁, ... 9ₙ) identisch sind und die genannten Zerhackersteuermodule (10₁, ... 10ₙ) identisch sind.

11. Verfahren zur Versorgung mit einer Ladung (19),
dadurch gekennzeichnet, daß es die folgenden Vorgänge umfaßt:
a) es wird ein statischer Leistungsgenerator gemäß einem der Ansprüche 1 bis 10 bereitgestellt, der mit seinen Ausgängen (3, 4) an die genannte Ladung angeschlossen wird,
b) es wird eine äußere Steuereinheit (18) bereitgestellt, die mit einem Zeitgeber (18a) versehen ist, der mit dem genannten Bus (14) und mit dem genannten numerischen Brückenüberwachungsgerät (17) des genannten statischen Leistungsgenerators verbunden wird,
c) es wird - vorzugsweise in der genannten äußeren Steuereinheit (18) - die genannte Anzahl N von Spannungs-Zeitrelationen (K₁ (t) , ... Kₙ (t)) und die genannte Anzahl N von Summierungs-Zeitrelationen (A₁ (t), ... Aₙ (t)) in Abhängigkeit von der Zeitrelation (U₃4 (t)) der zur Versorgung mit der genannten Ladung gewünschten Spannung bestimmt, so daß zu jedem Zeitpunkt die Gleichheit zwischen dem Wert, den die genannte Zeitrelation der gewünschten Spannung annimmt, und der Summe der N Werte, die in dem genannten Zeitpunkt die Produkte K₁(t)A₁(t) ... Kₙ (t)Aₙ (t) annehmen, der Werte, die die genannten Spannungs-Zeitrelationen annehmen, und der Werte, die die genannten Summierungs-Zeitrelationen annehmen erzielt wird,
d) es werden die folgenden Schritte ausgeführt, vorzugsweise in regelmäßigen Zeitabständen:
d1) der Wert, den die genannte jeweilige Spannungs-Zeitrelation (K₁ ... Kₙ) annimmt und der dem jeweiligen genannten Einstellwert der Zerhacker-Ausgangsspannung (u₁, ... uₙ) entspricht, wird über den genannten Bus (14) an die jeweiligen numerischen Zerhackersteuermodule übermittelt,
d2) der Wert, den die genannten Summierungs-Zeitrelationen (A₁ ... Aₙ) annehmen, wird an das genannte numerische Brückkenüberwachungsgerät (17) übermittelt, wobei das genannte numerische Brückenüberwachungsgerät (17) in Zusammenwirkung mit den genannten numerischen Brückensteuerungsmodulen (8₁, ... 8ₙ) die Steuersignale (71) für die genannten Leistungsschalter entwickelt.

12. Verfahren nach Anspruch 11,
dadurch gekennzeichnet daß die genannte Zeitrelation (U₃4 (t)) der gewünschten Versorgungsspannung periodisch mit der Periode P ist und daß die genannte äußere Steuereinheit (18) einen Speicher enthält, in dem die Werte gespeichert werden können, die die genannten Spannungs-Zeitrelationen und die genannten Summierungs-Zeitrelationen während der genannten Periode (P) annehmen.

13. Verfahren nach einem der Ansprüche 11 bis 12,
dadurch gekennzeichnet, daß die genannte Ladung von einem Sender, vorzugsweise einem Sonarsender, gebildet wird, der geeignet ist, eine Leistung von mehr als 1 Kw und vorzugsweise mehr als 10 Kw zu verbrauchen.

14. Verfahren nach einem der Ansprüche 11 bis 13,
dadurch gekennzeichnet, daß die genannten Schalter (58₁, 58₂) bzw. (58₁, 58₄) eines gleichen Zweiges jeder der genannten Brücken durch ein gemeinsames Signal (71a) bzw. (71b) gesteuert werden, und zwar der eine direkt und der andere über einen Wender (64), so daß die genannten Schalter eines gleichen Zweiges niemals gleichzeitig gesteuert werden.

## Claims

1. Static power generator comprising a number N of bridges (11₁,...11ₙ) with four branches, each branch comprising at least one power switch (58), which bridges have their outputs (1, 2) connected in series, which bridges are supplied with direct current on their inputs (5, 6), characterized in that said bridges are supplied by respective D.C. voltages (U₁, ...Uₙ) delivered respectively by choppers (9₁,...9ₙ), and at least one of said choppers is controlled by a digital chopper control module (10), and in that each of said bridges is respectively controlled by a digital bridge control module (8₁, ... 8ₙ), which bridge control modules are piloted by a digital bridge controller (17), which digital chopper control module (10) may receive a digital chopper output voltage order.

2. Generator according to Claim 1, characterized in that all of said choppers function at the same chopping frequency (f₁) included between 5 kHz and 200 kHz, thanks to chopping signals (45) delivered by a chopper controller (12) common to all of said choppers, which chopping signals have for frequency said chopping frequency and are temporally offset.

3. Generator according to either one of Claims 1 to 2, characterized in that said choppers are of the series type and said chopper switch (23) comprises at least one VMOS transistor which is controlled via a chopper control interface 13 which comprises galvanic insulation means (31).

4. Generator according to any one of Claims 1 to 3, characterized in that said digital chopper control module (10) comprises at least one buffer memory which may receive said digital chopper output voltage order and said module preferably comprises a first buffer memory (37) and a second buffer memory (38), at least one address decoder (36), at least one subtractor (56), an analog-to-digital converter (35), at least one proportional module (40), at least one integrator module (41), and said digital chopper control module preferably comprises a ramp generator (42) and a comparator (43).

5. Generator according to either one of Claims 3 to 4, characterized in that said VMOS transistor is connected in series with a first diode (28) and in that a second diode (29) is mounted in parallel with the assembly constituted by said transistor and said first diode, which second diode is mounted in the direction opposite the passing direction of said transistor and thus avoids the appearance of inverse voltage at the terminals of said transistor.

6. Generator according to any one of Claims 1 to 5, characterized in that each of said bridge control modules (8) comprises for each of said 4 branches at least one respective amplifier (69₁...69₄) for controlling said power switches (58), which amplifier is respetively controlled via a galvanic insulation device (61₁... 61₄), and in that said generator comprises for each of said branches of said bridges at least one insulated supply module (63₁... 63₄) which may respectively supply said galvanic insulation devices and said control amplifiers.

7. Generator according to Claim 6, characterized in that said supply modules are AC/DC converters which comprise a transformer and which are supplied with an alternating primary voltage (70) whose frequency is included between 1 kHz and 1 MHz.

8. Generator according to any one of Claims 1 to 7, characterized in that said power switches (58₁... 58₄) are controlled by control signals (71a, 71a, 71b, 71b) respectively via delay units (62₁,... 62₄), and in that the time constant (T₃) of said delay units of said power switches of the first and fourth branches of said bridge is substantially equal, and in that the time constant (T4) of said delay units of said power switches (58₂, 58₃) of said second and third branches of each of said bridges is substantially equal to and slightly different from said time constant (T₃).

9. Generator according to any one of Claims 1 to 8, characterized in that said power switches comprise at least one VMOS transistor and said generator further comprises at the input of each of said power switches at least one direct resistor (66) at the terminals of which is connected an assembly comprising an inverse resistor (67) and an inverse diode (68).

10. Generator according to any one of Claims 1 to 9, characterized in that said number n lies in a range going from 2 to 20 and preferably greater than 4, and in that said bridges (11₁,...11ₙ) are identical, said choppers (9₁...9ₙ) are identical and said chopper control modules (10₁...10ₙ) are identical.

11. Process for supplying a charge (19), characterized in that it comprises the following operations:
a - procuring a static power generator in accordance with any one of Claims 1 to 10, which is connected by its outputs (3, 4) to said charge,
b - procuring an outer control unit (18) provided with a clock (18a) which is connected to said bus (14) and to said digital bridge controller (17) of said static power generator,
c - determining and preferably determining in said outer control unit (18) said number N of temporal voltage relations (K₁(t)... Kₙ(t)), and said number N of temporal summation relations, (A₁(t),...Aₙ(t)), as a function of the temporal relation (U₃₄(t)) of the desired voltage to supply said charge, with the result that there is obtained at each instant equality between the value taken by said temporal relation of the desired voltage and the sum of the N values taken at said instant by the products K₁(t)A₁(t),...Kₙ(t)Aₙ(t) of the values taken by said temporal voltage relations and the values taken by said temporal summation relations,
d - carrying out, preferably at regular intervals of time, the following operations:
d-1- transmitting respectively to said digital chopper control modules, via said bus (14), the value taken by said temporal voltage relation respectively (K₁,...Kₙ), which value corresponds respectively to said chopper output voltage order (u₁,...uₙ),
d-2- transmitting to said digital bridge control controller (17) the value taken by said temporal summation relations (A1,...Aₙ), which digital bridge control controller elaborates in cooperation with said digital bridge control modules (8₁,...8ₙ) the signals (71) for controlling said power switches.

12. Process according to Claim 11, characterized in that said temporal relation (U₃₄(t)) of the desired supply voltage is periodic of period P and in that said outer control unit (18) comprises a memory in which the values taken by said temporal voltage relations and said temporal summation relations during said period (P) may be recorded.

13. Process according to either one of Claims 11 to 12, characterized in that said charge is constituted by an emitter, preferably a sonar emitter, which emitter is capable of absorbing a power greater than 1 Kw and preferably greater than 10 Kw.

14. Process according to any one of Claims 11 to 13, characterized in that said switches (58₁, 58₂), (58₃, 58₄) respectively of the same arm of each of said bridges, are controlled by a common signal (71a), (71b) respectively, one directly and the other via an inverter (64), with the result that said switches of the same arm are never controlled simultaneously.
